# EUROPÄISCHE PATENTANMELDUNG

(11) **EP 2 135 996 A1**
(43) Veröffentlichungstag der Anmeldung: **23.12.2009**
(21) Anmeldenummer: 09161892.6
(22) Anmeldetag: 04.06.2009
(51) Int. Cl.: D21H 17/67, D21H 27/08, B01D 53/94, F02M 35/10, B60R 13/02

(54) **Mit Kohlenstoff angereicherter Werkstoff**

(30) Priorität: 19.06.2008 DE 102008029079
(71) Anmelder: MAHLE International GmbH, 70376 Stuttgart (DE)
(72) Erfinder: Enderich, Andreas, 73734, Esslingen (DE); Renz, Birgit, 71672, Marbach (DE); von Seggern, Jörg, 73733, Esslingen (DE); Sauter, Hartmut, 71272, Renningen (DE)
(74) Vertreter: Bongen, Renaud & Partner

(57) **Zusammenfassung**

Die vorliegende Erfindung betrifft einen mit Kohlenstoff angereicherten Werkstoff zur Kohlenwasserstoffadsorption, der zumindest ein Grundmaterial und Kohlenstoff als integriertes Füllstoff aufweist. Erfindungswesentlich ist dabei, dass der Werkstoff ein Grundmaterial aus Kunststoff und Kohlenstoff als Füllstoff aufweist. Die Erfindung betrifft außerdem die Verwendung eines mit Kohlenstoff angereicherten Papiers (2) in einem Ansaugtrakt eines Kraftfahrzeuges.

## Beschreibung

Die vorliegende Erfindung betrifft einen mit Kohlenstoff angereicherten Werkstoff, welcher zumindest ein Grundmaterial und Kohlenstoff als integrierten Füllstoff aufweist, gemäß dem Oberbegriff des Anspruchs 1. Die Erfindung betrifft außerdem die Verwendung eines derartigen mit Kohlenstoff angereicherten Werkstoffs mit Papier oder Kunststoff als Grundmaterial. Des weiteren betrifft die Erfindung einen Ansaugtrakt eines Verbrennungsmotors gemäß dem Oberbegriff des Anspruchs 4 sowie ein mit einem derartigen Ansaugtrakt ausgestattetes Kraftfahrzeug.

Immer strenger werdende Umweltschutzauflagen, erfordern es zunehmend, die Gesamtbilanz an ausgestoßenen Kohlenwasserstoffen in einem Kraftfahrzeug zu bewerten bzw. zu berücksichtigen. Kohlenwasserstoffe sind üblicherweise Bestandteile von Diesel- und Ottokraftstoffen und verbleiben auch nach der Verbrennung in einem Verbrennungsmotor im Abgas desselben. Zusammen mit Stickoxid und Sonneneinstrahlung können sich diese Stoffe in schleimhautreizende organische Verbindungen umwandeln und dadurch maßgeblich das Entstehen des sogenannten Sommersmogs fördern. Aus diesen Gründen gibt es bereits in vielen Teilen der Welt Obergrenzen, die den Ausstoß von flüchtigen Kohlenwasserstoffen begrenzen. Führend in diesem Punkt ist insbesondere der Bundesstaat Kalifornien in den USA. Generell wird dabei bei Kraftfahrzeugen zwischen sogenannten "Fuel Emission und "Non-Fuel-Emissionen" unterschieden, wobei erstere ihre Herkunft aus dem Kraftstoff bzw. aus der Kraftstoffanlage haben, während letztgenannte nicht aus dem Kraftstoff bzw. aus einer Kraftstoffanlage stammen. Um eine Gesamtbilanz der KohlenwasserstoffEmissionen dabei nachhaltig reduzieren zu können, sind somit sowohl die aus dem Kraftstoff bzw. der Kraftstoffanlage stammenden Kohlenwasserstoffemissionen als auch die aus anderen Teilen des Kraftfahrzeuges stammenden Kohlenwasserstoffemissionen zu berücksichtigen.

Aus der EP 1 840 264 A1 ist ein mit Kohlenstoff angereichertes Papier oder eine Pappe bekannt, wobei das Papier mindestens einen Faserstoff und Kohlenstoff als Füllstoff aufweist. Der Gehalt an Kohlenstoff beträgt dabei mindestens 15 Vol.-%, bezogen auf das Feststoffvolumen des Papiers, wogegen der Gesamtfüllstoffgehalt aller vorliegenden Füllstoffe ca. 30 bis 60 Gew.-% bezogen auf das trockenen Gesamtgewicht des Papiers beträgt. Mit diesem Papier lassen sich durch einen Pyrolysevorgang mit anschließender Infiltration mit Silizium keramische Körper herstellen, welche extrem dünnwandig ausgeführt sein können, so dass mit diesem Papier eine äußerst komplex geformte Strukturkeramik möglich ist, welche mit anderen Formgebungsverfahren, wie beispielsweise dem Extrudieren oder Spritzgießen, nicht möglich sind.

Aus der JP 58072669 A ist ein Luftfilter bekannt, welches ein, in einem Filtergehäuse eingesetztes, ringförmiges Filterelement aufweist. Das Filterelement ist dabei von radial außen nach radial innen durchströmt und besteht zur Kohlenwasserstoffadsorption überwiegend aus Aktivkohle.

Die vorliegende Erfindung beschäftigt sich mit dem Problem, die Gesamtemission an ausgestoßenen Kohlenwasserstoffen bei Kraftfahrzeugen, zu reduzieren.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, bisher bezüglich einer Kohlenwasserstoffemission nicht berücksichtigte Bereiche eines Kraftfahrzeuges aus einem Kohlenwasserstoff absorbierenden Material auszubilden bzw. mit einem derartigen Kohlenwasserstoff absorbierenden Material zu belegen. Ein derartiges, Kohlenwasserstoff absorbierendes Material kann beispielsweise als Papier ausgebildet sein mit einem Faserstoff aufweisenden Grundmaterial und Kohlenstoff als Füllstoff. Dieses Papier kann beispielsweise separat zu einem Luftfilter in einem Ansaugtrakt eines Verbrennungsmotors angeordnet werden und dort ein nach außen Kriechen von Kohlenwasserstoffen aus dem Verbrennungsmotor bei abgestelltem Kraftfahrzeug zumindest reduzieren. Selbstverständlich ist dabei der Gesamtemissionsgehalt an Kohlenwasserstoffen, welche bei abgestelltem Verbrennungsmotor aus dessen Ansaugtrakt nach außen gelangen äußerst gering, auf keinen Fall jedoch vernachlässigbar gering. Ein in diesem Bereich angeordnetes und mit Kohlenstoff angereichertes Papier minimiert dabei zuverlässig das nach außen Kriechen von Kohlenwasserstoffen und verbessert somit die Gesamtbilanz des Kraftfahrzeuges. Selbstverständlich ist dabei auch denkbar, dass ein derartiger, mit Kohlenstoff angereicherter Werkstoff, zur Kohlenwasserstoffadsorption in Lüftungskanälen einer Lüftungs- bzw. Klimaanlage eingesetzt wird.

Gemäß eines weiteren allgemeinen Gedankens der Erfindung, kann der mit Kohlenstoff angereichter Werkstoff einen Kunststoff als Grundmaterial und Kohlenstoff als Füllstoff aufweisen und in dieser Beschaffenheit beispielsweise für Innenausbauteile, wie beispielsweise eine Innenverkleidung, einen Dachhimmel bzw. ein Armaturenbrett eingesetzt werden. In diesen Innenverkleidungsteilen sowie im Armaturenbrett sind üblicherweise eine beträchtliche Anzahl an Kohlenwasserstoffen gebunden, welche jedoch im Laufe der Zeit aus dem Material in die Umgebung austreten. Dieses Austreten der Kohlenwasserstoffe wird insbesondere bei fabrikneuen Autos als auffälliger Geruch wahrgenommen. Dieser charakteristische Geruch nimmt dabei über die Zeit gesehen ab, was gleichbedeutend mit einer sich stets weiter reduzierenden Emission ist. Trotz allem sind auch die in den genannten sowie weiteren Bauteilen des Kraftfahrzeuges enthaltenen Kohlenwasserstoffe, welche im Laufe der Zeit in die Umgebung diffundieren können, in der Gesamtbilanz zu erfassen und keineswegs zu vernachlässigen. Wird daher, wie die Erfindung es vorschlägt, der Kunststoff der betreffenden Innenauskleidungsteile mit Kohlenstoff angereichert, wobei der Kohlenstoff selbstverständlich einen integralen Bestandteil des Werkstoffes bildet und üblicherweise nicht von diesen gelöst werden kann, so kann eine hohe Adsorptionsrate an Kohlenwasserstoffen erreicht werden und dadurch das Emissionsverhalten der betreffenden Bauteile deutlich reduziert werden. Werden dabei mehrere oder vorzugsweise die überwiegende Mehrheit an Innenausbauteilen mit einem derartigen Kohlenstoff angereichert, so lässt sich die Gesamtbilanz an Kohlenwasserstoffen in einem betreffenden Fahrzeug äußerst positiv beeinflussen.

Zweckmäßig ist das mit Kohlenstoff angereicherte Papier in einem Ansaugtrakt eines Verbrennungsmotors so dimensioniert, dass es zumindest 0,1 g Kohlenwasserstoffe/g Kohlenstoff aufnehmen kann. Die bei der Adaption durchgeführte Dimensionierung muss so ausgeführt werden, dass die austretende Kohlenwasserstoffmasse aus dem Ansaugstrang minimiert wird. Beim Betrieb des Verbrennungsmotors wird dabei das mit Kohlenstoff angereicherte Papier rückgespült und damit gereinigt.

Bei einer weiteren vorteilhaften Ausführungsform der erfindungsgemäßen Lösung, ist das mit Kohlenstoff angereicherte Papier in einer Senke eines Luftansaugkanals des Ansaugtraktes angeordnet. Nachdem Kohlenwasserstoffe schwerer sind als Luft, bietet eine derartige Anordnung eine sichere Möglichkeit, die durch den Ansaugtrakt nach außen diffundierenden Kohlenwasserstoffe, welche üblicherweise durch die Senke diffundieren, zu absorbieren.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und wird in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1a: ein erfindungsgemäßes, mit Kohlenstoff angerei- chertes Papier im Bereich eines Luftansaugkanals eines Ansaugtraktes oder in einem Lüftungskanal einer Lüftungs-/Klimaanlage eines Kraftfahrzeu- ges,
- Fig. 1b: eine Darstellung wie in Fig. 1a, jedoch bei einer anderen Ausführungsform,
- Fig. 2: ein, aus dem erfindungsgemäßen und mit Kohlen- stoff angereicherten Papier hergestelltes Wickel- filter,
- Fig. 3: mögliche Auskleidungen für luftführende Kanäle,
- Fig. 4: eine Kombination eines Filterelementes mit dem erfindungsgemäßen mit Kohlenstoff angereicherten Papier.

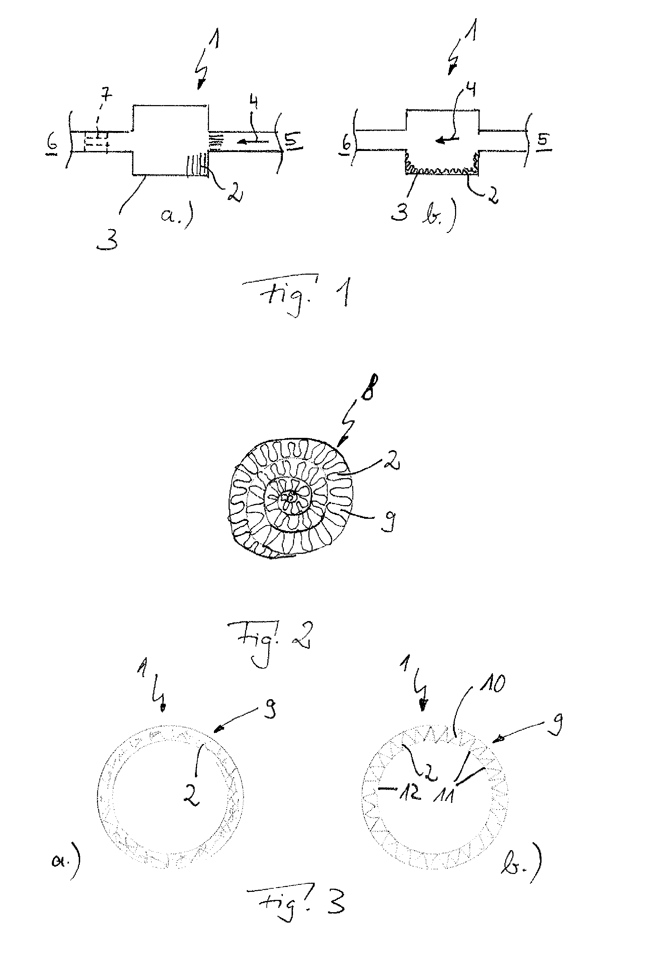

Entsprechend Fig. 1a, weist ein Luftansaugkanal 1 eines im übrigen nicht gezeigten Ansaugtraktes eines Verbrennungsmotors, beispielsweise in einem Kraftfahrzeug, ein mit Kohlenstoff angereichertes Papier 2 mit einem Faserstoff aufweisenden Grundmaterial und Kohlenstoff als Füllstoff zur Kohlenwasserstoffadsorption auf. Das mit Kohlenstoff angereicherte Papier 2 ist dabei vorzugsweise in einer Senke 3 des Luftansaugkanals 1 angeordnet und absorbiert in diesem Bereich Kohlenwasserstoffe, welche bei abgeschaltetem Verbrennungsmotor aus diesem heraus durch den Luftansaugkanal 1 ins Freie diffundieren. Die Diffusionsrichtung ist dabei mit dem Pfeil 4 angegeben, welcher üblicherweise von einer Verbrennungsmotorseite 5 zu einer Außenseite 6 führt.

Beim Betrieb des Verbrennungsmotors wird Luft durch den Luftansaugkanal 1 entgegengesetzt der Pfeilrichtung 4, das heißt von der Außenseite 6 zur Seite 5 des Verbrennungsmotors hin in diesen eingesaugt. Selbstverständlich ist dabei vorzugsweise vor der Außenseite 6 noch ein Luftfilter 7 angeordnet, welches gemäß der Fig. 1a mit unterbrochen gezeichneter Linie dargestellt ist. Dieses Luftfilter 7 ist somit separat zu dem kohlenstoffhaltigen Papier angeordnet, wobei letzteres beim Betrieb des Verbrennungsmotors mit von der Außenseite 6 angesaugter Frischluft rückgespült werden kann.

Betrachtet man die Fig. 1b, so fällt auf, dass das erfindungsgemäße und mit Kohlenstoff angereicherte Papier 2 den ganzen Bereich der Senke 3 auskleidet und daher eine ausreichende Menge an Kohlenwasserstoffen absorbieren kann. Generell soll dabei das Bezugszeichen 1 nicht nur für einen Luftansaugkanal stehen, sondern kann beispielsweise auch einen Lüftungskanal einer Lüftungs-/Klimaanlage eines Kraftfahrzeuges kennzeichnen.

Das erfindungsgemäße, mit Kohlenstoff angereicherte Papier 2, welches ein Faserstoff aufweisendes Grundmaterial und Kohlenstoff als Füllstoff zur Kohlenwasserstoffadsorption aufweist, kann selbstverständlich auch in einem Filter 8, wie dieser beispielsweise gemäß der Fig. 2 dargestellt ist, insbesondere in einem Wickelfilter, verwendet werden. Im Gegensatz zu reinen Luftfiltern, können hierbei die einzelnen Kanäle 9 des Filters 8 beidseitig offen sein, da das Filter 8 üblicherweise nur bei abgestelltem Verbrennungsmotor zur Kohlenwasserstoffadsorption dienen und ansonsten, das heißt insbesondere beim Betrieb des Verbrennungsmotors, möglichst wenig Strömungswiderstand erzeugen soll. Denkbar ist auch der Einsatz des erfindungsgemäßen Papiers 2 in einem nicht gezeigten Kraftstofffilter zur Reinigung des dort abgeschiedenen Wassers.

Bei einer anderen Ausführungsform des erfindungsgemäßen Werkstoffes, weist dieser ein Grundmaterial aus Kunststoff und Kohlenstoff als Füllstoff auf. Ein derartiger Werkstoff besitzt ein nicht zu unterschätzendes und abhängig vom Kohlenstoffanteil ausgebildetes Adsorptionsvermögen zur Adsorption von Kohlenwasserstoffen und kann daher beispielsweise für ein Armaturenbrett eines Kraftfahrzeuges und/oder für ein Innenverkleidungsteil eines Kraftfahrzeuges, insbesondere in einem Dachhimmel zur Anwendung kommen. Fabrikneue Kraftfahrzeuge besitzen typischerweise einen charakteristischen Geruch, welcher vom Kunden, das heißt dem Käufer des Kraftfahrzeuges, üblicherweise in Bezug zur Neuheit des Kraftfahrzeuges gesetzt wird. Dieser charakteristische Geruch resultiert überwiegend aus einem Ausdünsten von Kohlenwasserstoffen aus den Innenverkleidungsteilen, wie beispielsweise dem Dachhimmel oder dem Armaturenbrett, und lässt erst mit der Zeit nach. Da heutzutage jedoch nicht nur die vom Verbrennungsmotor bei der Verbrennung erzeugten und danach ausgestoßenen Kohlenwasserstoffe des Kraftfahrzeuges in einer Bilanz erfasst werden sollen, sondern der Gesamtemissionsgrad an Kohlenwasserstoffen, ist es erforderlich, auch das Ausdiffundieren von Kohlenwasserstoffen aus den Innenausbauteilen des Kraftfahrzeuges möglichst auf einem geringem Niveau halten zu können. Dies kann beispielsweise durch den erfindungsgemäßen Werkstoff erfolgen, welcher durch die Zumischung von Kohlenstoff als integralem Bestandteil, ein nicht zu unterschätzendes Adsorptionsvermögen für Kohlenwasserstoffe bietet, so dass diese gar nicht erst in die Umgebung gelangen.

Generell ist es auch vorstellbar, dass es sich beim Grundmaterial um kohle-/adsorptionsgefüllten Kunststoff handelt, der beispielsweise durch Spritzen oder Blasen zu luftführenden Bauteilen verarbeitet wird.

Ebenso zu einer derartigen Gesamtbilanz an Kohlenwasserstoffen gehören aus dem Ansaugtrakt des Verbrennungsmotors des Kraftfahrzeuges bei dessen Stillstand herauskriechende Kohlenwasserstoffe, welche durch ein mit Kohlenstoff angereichertes Papier, das im Luftansaugkanal 1 des Verbrennungsmotors angeordnet ist, stark reduziert werden können.

Generell ist es mit dem erfindungsgemäßen, mit Kohlenstoff angereicherten Werkstoff, welcher beispielsweise Papier oder Kunststoff als Grundmaterial und Kohlenstoff als Füllstoff aufweist, bei einer Verwendung an den in vorigen Absätzen genannten Orten im Kraftfahrzeug möglich, die Gesamtbilanz an Kohlenwasserstoffemission eines Kraftfahrzeuges deutlich zu verbessern. Der Kohlenstoff ist dabei derart mit dem Grundmaterial des Werkstoffs verbunden, dass ein Ablösen desselben ausgeschlossen werden kann.

Gemäß der Fig. 3 sind weitere Anwendungsgebiete des erfindungsgemäßen mit Kohlenstoff angereicherten Papiers 2 dargestellt, wobei dieses gemäß der Fig. 3b als Faltenstern 10 ausgebildet ist. Hierbei kann der Faltenstern 10 mit seinen inneren Längskanten 11 in eine Zarge 12 eingebettet sein und dadurch eine Stützung und eine Einbauhilfe für den Faltenstern 10 bilden. Die Zarge 12 ist beispielsweise als Gitterstruktur ausgebildet und ermöglicht dadurch den freien Luftzutritt zum Faltenstern 10. Durch die Orientierung des Faltensterns 10 im Luftansaugkanal/Lüftungskanal 1ensteht durch das Vorsehen des mit Kohlenstoff angereicherten Papiers 2 nahezu kein zusätzlicher Strömungswiderstand.

Demgegenüber ist das Filtermaterial gemäß der Darstellung in Fig. 3a nicht als Faltenstern 10 ausgebildet.

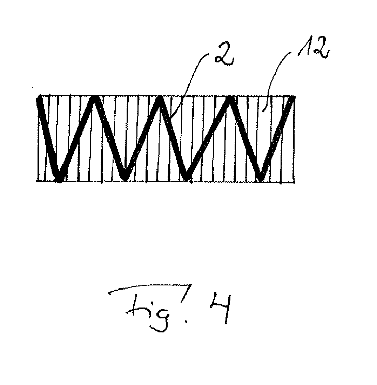

Denkbar ist auch ein Einsatz des mit Kohlenstoff angereicherten Papiers 2 in Kombination mit einem weiteren Filter, beispielsweise einem Papierfilter 12, wie dies in Fig. 4 dargestellt ist. Auch hier ist darauf zu achten, dass das mit Kohlenstoff angereicherte Papier 2 so angeordnet ist, dass es durch die vorgegebene Strömungsrichtung durch das Papierfilter 12 vorzugsweise nahezu keinen weiteren Strömungswiderstand erzeugt.

## Patentansprüche

1. Mit Kohlenstoff angereicherter Werkstoff zur Kohlenwasserstoffadsorption, der zumindest ein Grundmaterial und Kohlenstoff als integrierten Füllstoff aufweist,
**dadurch gekennzeichnet,**
**dass** der Werkstoff ein Grundmaterial aus Kunststoff und Kohlenstoff als Füllstoff aufweist.

2. Verwendung eines mit Kohlenstoff angereicherten Papiers (2) mit einem Faserstoff aufweisenden Grundmaterial und Kohlenstoff als Füllstoff zur Kohlenwasserstoffadsorption an folgenden Orten, nämlich
- in einem Ansaugtrakt eines Verbrennungsmotors, separat zu einem Luftfilter (7), und/oder
- in einem Lüftungskanal (1) einer Lüftungs-/Klimaanlage eines Kraftfahrzeuges, und/oder
- in einem Filter (8), insbesondere einem Wickelfilter, und/oder
- in einem Kraftstofffilter zur Reinigung des dort abgeschiedenen Wassers.

3. Verwendung eines mit Kohlenstoff angereicherten Kunststoffes nach Anspruch 1 als Kohlenwasserstoffabsorber in zumindest folgenden Bauteilen, nämlich
- einem Armaturenbrett eines Kraftfahrzeuges, und/oder
- einem Innenverkleidungsteil eines Kraftfahrzeuges, insbesondere einem Dachhimmel.

4. Ansaugtrakt eines Verbrennungsmotors,
**dadurch gekennzeichnet,**
**dass** in dem Ansaugtrakt separat zu einem Luftfilter (7) ein mit Kohlenstoff angereichertes Papier (2) als Kohlenwasserstoffabsorber vorgesehen ist, wobei das Papier (2) zumindest einen Faserstoff als Grundmaterial und Kohlenstoff als Füllstoff aufweist.

5. Ansaugtrakt nach Anspruch 4,
**dadurch gekennzeichnet,**
**dass** das Papier (2) auf einer Reinseite des Luftfilters (7), das heißt zwischen diesem und einer Brennkammer des Verbrennungsmotors angeordnet ist.

6. Ansaugtrakt nach Anspruch 4 oder 5,
**dadurch gekennzeichnet,**
**dass** das Papier (2) in einer Senke (3) eines Luftansaugkanals (1) des Ansaugtraktes angeordnet ist.

7. Ansaugtrakt nach einem der Ansprüche 4 bis 6,
**dadurch gekennzeichnet,**
**dass** das mit Kohlenstoff angereicherte Papier (1) so dimensioniert ist, dass es wenigstens 0,5 g Kohlenwasserstoffe aufnehmen kann.

8. Kraftfahrzeug mit einem Ansaugtrakt nach einem der Ansprüche 4 bis 7.

## Geänderte Patentansprüche

### Geänderte Patentansprüche gemäss Regel 137(2) EPÜ.

**1.** Verwendung eines mit Kohlenstoff angereicherten Papiers (2) mit einem Faserstoff aufweisenden Grundmaterial und Kohlenstoff als Füllstoff zur Kohlenwasserstoffadsorption in einem Lüftungskanal (1) einer Lüftungs-/Klimaanlage eines Kraftfahrzeuges und/oder in einem Wickelfilter.

**2.** Verwendung eines mit Kohlenstoff angereicherten Werkstoffes zur Kohlenwasserstoffadsorption, der zumindest ein Grundmaterial aus Kunststoff und Kohlenstoff als integrierten Füllstoff aufweist, in zumindest folgenden Bauteilen, nämlich
- einem Armaturenbrett eines Kraftfahrzeuges, und/oder
- einem Innenverkleidungsteil eines Kraftfahrzeuges, insbesondere einem Dachhimmel

**3.** Ansaugtrakt eines Verbrennungsmotors,
**dadurch gekennzeichnet,**
**dass** in dem Ansaugtrakt separat zu einem Luftfilter (7) ein mit Kohlenstoff angereichertes Papier (2) als Kohlenwasserstoffabsorber vorgesehen ist, wobei das Papier (2) zumindest einen Faserstoff als Grundmaterial und Kohlenstoff als Füllstoff aufweist und in einer Senke (3) eines Luftansaugkanals (1) des Ansaugtraktes angeordnet ist.

**4.** Ansaugtrakt nach Anspruch 3,
**dadurch gekennzeichnet,**
**dass** das mit Kohlenstoff angereicherte Papier (1) so dimensioniert ist, dass es wenigstens 0,5 g Kohlenwasserstoffe aufnehmen kann.
